# EUROPEAN PATENT APPLICATION

(11) **EP 4 632 906 A1**
(43) Date of publication of application: **15.10.2025**
(21) Application number: 23899723.3
(22) Date of filing: 15.11.2023
(51) Int. Cl.: H01M 50/244, H01M 50/204

(54) **ENERGY STORAGE CONTAINER**

(30) Priority: 07.12.2022 CN 202211567306
(71) Applicant: Xiamen Hithium Energy Storage Technology Co., Ltd., Xiamen, Fujian 361100 (CN)
(72) Inventor: FANG, Yalong, Xiamen, Fujian 361100 (CN); FAN, Shangjie, Xiamen, Fujian 361100 (CN)
(74) Representative: Michalski Hüttermann & Partner Patentanwälte mbB
(86) International application number: PCT/CN2023/131839
(87) International publication number: WO 2024/120143

(57) **Abstract**

An energy-storage container (100), relating to the technical field of energy-storage device, includes an outer frame (10), a support-beam assembly (20), multiple inner frames (30), and multiple pairs of battery supports (40). The support-beam assembly (20) is fixed at a bottom of the outer frame (10). The multiple inner frames (30) are distributed along a width direction of the outer frame (10) in the accommodating space defined by the outer frame (10). The multiple inner frames (30) are supported on the support-beam assembly (20) and fixedly connected to the outer frame (10). Each pair of battery supports (40) is fixed to two adjacent inner frames (30). In the embodiments of the disclosure, the inner frames (30) are fixed in the accommodating space of the outer frame (10), and the battery supports (40) are fixed to the inner frames (30), defining the energy-storage container (100) of an integrated structure. This simplifies the battery-mounting framework. Additionally, by arranging the support-beam assembly (20) at the bottom of the outer frame (10) and supporting the inner frames (30) on the support-beam assembly (20), the support strength for the inner frames (30) is improved, thereby enhancing the structural strength of the energy-storage container (100) and preventing damage to the energy-storage container (100) due to excessive loading.

## Description

### CROSS-REFERENCE TO RELATED APPLICATION(S)

The disclosure claims priority to Chinese Patent Application No. 202211567306.6, titled "Energy-Storage Container," filed on 07 December 2022. The entire contents of the Chinese patent application are incorporated herein by reference.

### TECHNICAL FIELD

The disclosure relates to the technical field of energy-storage devices, in particular to an energy-storage container.

### BACKGROUND

As the demand for overall energy capacity in energy-storage systems continues to increase, the number of batteries included in such systems also grows, increasing total system weight. Typically, energy-storage systems are installed within containers. When the total weight of the energy-storage system increases, higher structural strength of the container is required.

### SUMMARY

One primary objective of the disclosure is to provide an energy-storage container with improved structural strength.

To achieve the above objective, the disclosure adopts the following technical solutions.

According to one aspect of the disclosure, an energy-storage container is provided. The energy-storage container includes an outer frame, a support-beam assembly, multiple inner frames, and multiple pairs of battery supports. The outer frame defines an accommodating space. The support-beam assembly is located at a bottom of the outer frame and fixedly connected to the outer frame. The multiple inner frames are distributed in the accommodating space along a width direction of the outer frame. The multiple inner frames divide the accommodating space into multiple battery compartments. The multiple inner frames are supported on the support-beam assembly and fixedly connected to the outer frame. Each pair of battery supports is respectively fixed to two adjacent inner frames to define a battery accommodating slot. The multiple pairs of battery supports are fixed at intervals along a height direction of the outer frame between two adjacent inner frames.

In the embodiments of the disclosure, the inner frames are fixed in the accommodating space of the outer frame, and the battery supports are fixed to the inner frames, defining an integrated energy-storage container structure. This simplifies the battery-mounting framework. Additionally, by arranging the support-beam assembly at the bottom of the outer frame and supporting the inner frames on the support-beam assembly, the support strength for the inner frames is improved, thereby enhancing the structural strength of the energy-storage container and preventing damage to the energy-storage container due to excessive loading.

It should be understood that the above general description and the following detailed description are exemplary and explanatory only, and such descriptions should not be construed as limiting the disclosure.

### BRIEF DESCRIPTION OF THE DRAWINGS

The above and other features and advantages of the disclosure will become apparent from the detailed description of exemplary embodiments herein with reference to the accompanying drawings.
FIG. 1 is a schematic structural diagram illustrating battery installation in an energy-storage container according to an exemplary embodiment.
FIG. 2 is a schematic structural diagram of an energy-storage container according to an exemplary embodiment.
FIG. 3 is a schematic structural diagram of an outer frame according to an exemplary embodiment.
FIG. 4 is a schematic structural diagram of a support-beam assembly according to an exemplary embodiment.
FIG. 5 is a schematic structural diagram from a top view of a support-beam assembly according to an exemplary embodiment.
FIG. 6 is a schematic structural diagram of another support-beam assembly according to an exemplary embodiment.
FIG. 7 is a schematic structural diagram from a top view of another support-beam assembly according to an exemplary embodiment.
FIG. 8 is a schematic structural diagram of an inner frame according to an exemplary embodiment.
FIG. 9 is a schematic structural diagram from a front view of an inner frame according to an exemplary embodiment.
FIG. 10 is a schematic structural diagram of the battery support according to an exemplary embodiment.
FIG. 11 is a schematic structural diagram illustrating battery support by a battery support according to an exemplary embodiment.
FIG. 12 is an enlarged view of area A of the battery support in FIG. 10.
FIG. 13 is an enlarged sectional view of area B of the battery support in FIG. 11.
FIG. 14 is a schematic structural diagram from an exploded view of another battery support according to an exemplary embodiment.
FIG. 15 is an enlarged view of area C of the battery support in FIG. 14.
FIG. 16 is a schematic structural diagram illustrating side battery support by the battery support according to an exemplary embodiment.
FIG. 17 is an enlarged view of area D of the battery support in FIG. 16.

The nouns corresponding to respective reference symbols in the figures are as follows:
100 energy-storage container;
10 outer frame; 20 support-beam assembly; 30 inner frame; 40 battery support;
11 base frame; 12 top frame; 13 upright post;
111 bottom cross-beam; 112 bottom longitudinal beam;
121 top cross-beam; 122 top longitudinal beam; 123 reinforcing beam;
21 support cross-beam; 22 support longitudinal beam;
211 notched segment; 212 clearance opening;
221 first sub-longitudinal beam; 222 second sub-longitudinal beam;
31 vertical beam; 32 connecting longitudinal beam; 33 reinforcing vertical beam;
41 support member; 42 limiting assembly; 43 partition mechanism; 44 limiting mechanism; 45 reinforcing rib;
411 bearing surface; 412 limiting surface; 413 first guiding surface; 414 second guiding surface;
4111 first bearing zone; 4112 second bearing zone; 4113 first fixing portion; 4114 second fixing portion; 4115 fixing hole;
4121 first bent section; 4122 second bent section; 4123 first positioning groove; 4124 second positioning groove;
431 first baffle; 432 second baffle; 433 connecting plate;
441 first limiting portion; 442 second limiting portion;
51 first battery; 52 second battery; 53 fixing plate.

### DETAILED DESCRIPTION

The exemplary embodiments will now be described more fully with reference to the accompanying drawings. However, the exemplary embodiments can be implemented in various forms and should not be construed as limited to the embodiments described herein. Instead, these embodiments are provided so that the disclosure can be thorough and complete, and the concepts of the exemplary embodiments can be fully conveyed to those skilled in the art. Identical reference symbols in the drawings denote identical or similar structures, and their detailed descriptions are therefore omitted.

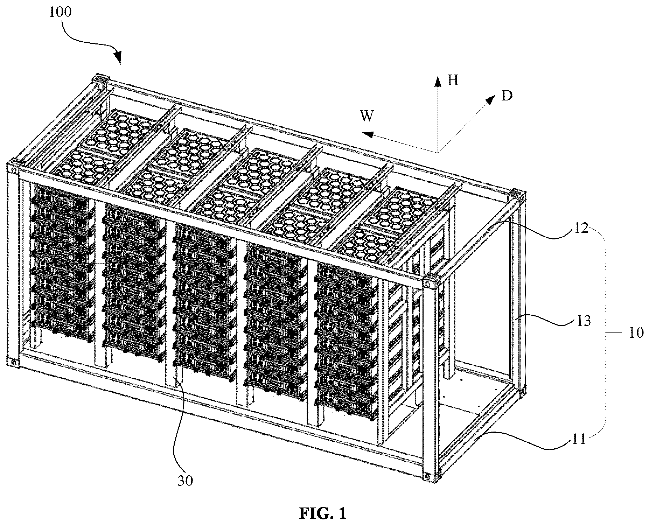

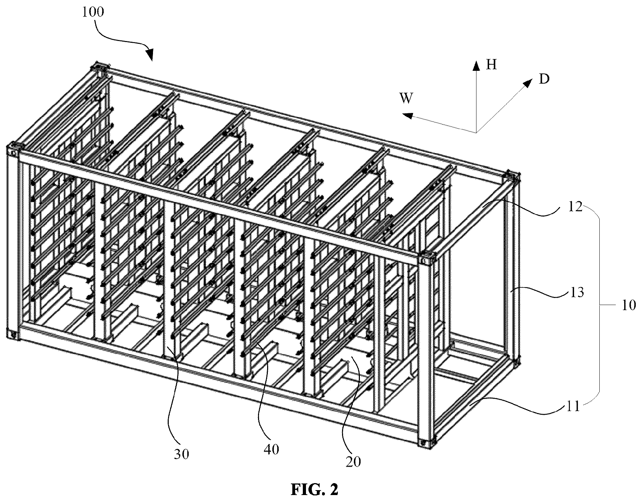

Embodiments of the disclosure provide an energy-storage container 100. As shown in FIGs 1 and 2, the energy-storage container 100 includes an outer frame 10, a support-beam assembly 20, multiple inner frames 30, and multiple pairs of battery supports 40. The outer frame 10 defines an accommodating space. The support-beam assembly 20 is located at a bottom of the outer frame 10 and is fixedly connected to the outer frame 10. The multiple inner frames 30 are arranged along a width direction of the outer frame 10 in the accommodating space, and divide the accommodating space into multiple battery compartments. The multiple inner frames 30 are supported on the support-beam assembly 20 and are fixedly connected to the outer frame 10. Each pair of battery supports 40 are fixedly connected to two adjacent inner frames 30 to define a battery accommodating slot. Multiple pairs of battery supports 40 are fixedly arranged at intervals along a height direction of the outer frame 10 between adjacent inner frames 30.

In the embodiments of the disclosure, the inner frames 30 are fixed in the accommodating space of the outer frame 10, and the battery supports 40 are fixedly connected to the inner frames 30, thereby forming an integrated energy-storage container 100 that simplifies the structural framework for battery mounting. Additionally, by disposing the support-beam assembly 20 at the bottom of the outer frame 10 and supporting the inner frames 30 on the support-beam assembly 20, the supporting strength for the inner frames 30 is enhanced, which in turn improves the structural strength of the energy-storage container 100 and prevents the energy-storage container 100 from potential damage caused by excessive loading.

The depth direction of the outer frame 10 corresponds to the direction indicated by D as shown in the drawings, the width direction of the outer frame 10 corresponds to the direction indicated by W as shown in the drawings, and the height direction of the outer frame 10 corresponds to the direction indicated by H as shown in the drawings. The planes on which the inner frames 30 are located are parallel to both the depth direction D and the height direction H of the outer frame 10, thereby allowing the accommodating space of the outer frame 10 to be divided into multiple cubic battery compartments. Furthermore, apart from defining battery compartments, the multiple inner frames 30 may also partition the accommodating space into an electrical compartment for placing electrical components. Each pair of battery supports 40 includes two battery supports 40 that are respectively fixed to opposing sides of two adjacent inner frames 30.

In some embodiments, as shown in FIG. 1 or FIG. 2, the outer frame 10 includes a base frame 11, a top frame 12, and multiple upright posts 13. The base frame 11 and the top frame 12 are disposed opposite to each other, and both ends of each of the upright posts 13 are respectively fixed to the base frame 11 and the top frame 12. The support-beam assembly 20 is fixedly connected to the base frame 11.

In particular, the outer frame 10 may be configured as a cubic structure, in which case both the base frame 11 and the top frame 12 are rectangular structures of equal size. The outer frame 10 includes at least four upright posts 13, and both ends of each upright post 13 are respectively fixed to one corner of the base frame 11 and one corner of the top frame 12.

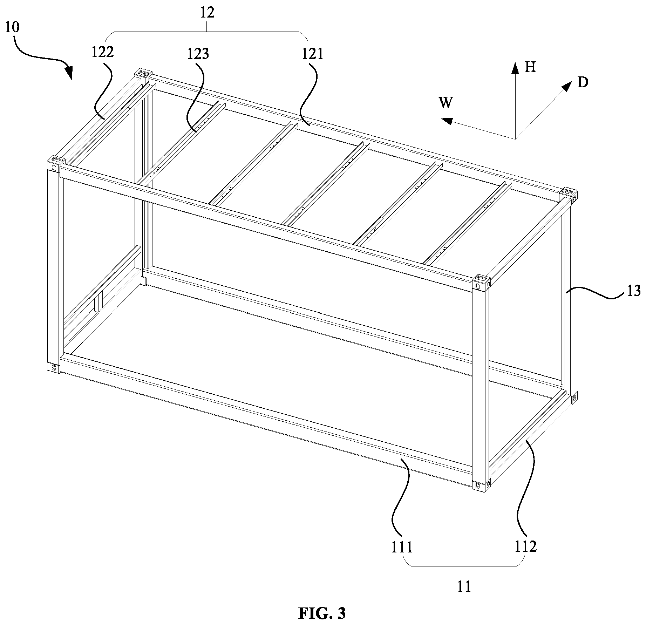

Taking the example where both the base frame 11 and the top frame 12 are rectangular in shape, as shown in FIG. 3, the base frame 11 includes a pair of bottom cross-beams 111 disposed opposite to each other and a pair of bottom longitudinal beams 112 disposed opposite to each other. The pair of bottom cross-beams 111 and the pair of bottom longitudinal beams 112 are sequentially connected end-to-end to define a rectangular structure of the base frame 11. As shown in FIG. 3, the top frame 12 includes a pair of top cross-beams 121 disposed opposite to each other and a pair of top longitudinal beams 122 disposed opposite to each other. The pair of top cross-beams 121 and the pair of top longitudinal beams 122 are sequentially connected end-to-end to define a rectangular structure of the top frame 12. For the base frame 11 that is defined as the rectangular structure, the ends of the support cross-beam 21 are respectively fixed to the pair of bottom longitudinal beams 112. For the top frame 12 that is defined as the rectangular structure, the inner frames 30 are fixedly connected to the top cross-beams 121 of the top frame 12.

The longitudinal beams referred to in the disclosure are beam structures arranged along the depth direction D of the outer frame 10, such that the length direction of the longitudinal beams is parallel or approximately parallel to the depth direction D of the outer frame 10. These longitudinal beams include not only the bottom longitudinal beams 112 of the base frame 11 and the top longitudinal beams 122 of the top frame 12, but also other longitudinal beam structures, such as the support longitudinal beams 22 of the support-beam assembly 20 as described below. The cross-beams referred to in the disclosure are beam structures arranged along the width direction W of the outer frame 10, such that the length direction of the cross-beams is parallel or approximately parallel to the width direction W of the outer frame 10. These cross-beams include not only the bottom cross-beams 111 of the base frame 11 and the top cross-beams 121 of the top frame 12, but also other cross-beam structures, such as the support cross-beams 21 of the support-beam assembly 20 as described below.

The ends of the upright posts 13 may be fixedly connected to the corners of the base frame 11 or the top frame 12 by welding, or by using corner plates. Optionally, the connection may be realized by welding, followed by reinforcement with corner plates, to enhance the connection strength between the upright posts 13 and the base frame 11 or the top frame 12, thereby improving the supporting strength of the outer frame 10.

Optionally, in conjunction with the above, in addition to the top cross-beams 121 and the top longitudinal beams 122, the top frame 12 may further include multiple reinforcing beams 123 arranged along the width direction W of the outer frame 10, as shown in FIG. 3. The multiple reinforcing beams 123 correspond one-to-one with the multiple inner frames 30, and a top portion of each inner frame 30 is fixedly connected to a corresponding reinforcing beam 123. In this manner, after each inner frame 30 is connected to a corresponding reinforcing beam 123, the fixing area of the inner frame 30 is enlarged, thereby improving the stability of the inner frame 30 and further enhancing the structural stability of the energy-storage container 100.

Two ends of each reinforcing beam 123 are respectively fixed to a pair of top cross-beams 121. The length direction of the reinforcing beams 123 is parallel to the depth direction D of the outer frame 10, i.e., parallel to the plane on which the inner frames 30 are located. As such, by adjusting the top structure of the inner frames 30, the multi-point fixing between the inner frames 30 and the reinforcing beams 123 may be realized, and a stable connection between the inner frames 30 and the reinforcing beams 123 along the height direction H of the outer frame 10 may be ensured, thereby enhancing the suspension strength of the inner frames 30.

The reinforcing beams 123 may be made of square-section steel, L-section steel, H-section steel, or other types of structural steel, provided that the reinforcing beams 123 can be fixedly connected to the top cross-beams 121 and the inner frames 30. The embodiments of the disclosure are not limited in this regard.

In some embodiments, as shown in FIG. 2 and FIGs 4 or 5, the support-beam assembly 20 includes multiple support longitudinal beams 22, and the multiple support longitudinal beams 22 are arranged at intervals along the width direction of the outer frame 10. Two ends of each support longitudinal beam 22 are respectively fixed to two opposite ends of the outer frame 10 in the depth direction of the outer frame. The multiple support longitudinal beams 22 correspond one-to-one with the multiple inner frames 30, and each inner frame 30 is supported on a respective support longitudinal beam 22. In this manner, by configuring the support-beam assembly 20 as multiple support longitudinal beams 22, each inner frame 30 may be supported independently, thereby improving the support strength for the inner frames 30 and enhancing the overall structural strength of the energy-storage container 100.

Specifically, an inner frame 30 may be supported on a support longitudinal beam 22 either by resting a bottom of the inner frame 30 on an upper surface of the support longitudinal beam 22 or by fixedly connecting the bottom of the inner frame 30 to a side surface of the support longitudinal beam 22. The present embodiments are not limited in this regard.

Optionally, when the support-beam assembly 20 includes multiple support longitudinal beams 22, the top portions of the multiple inner frames 30 are fixedly connected to the top of the outer frame 10, and the bottom of each inner frame 30 is fixedly connected to a side surface of a corresponding support longitudinal beam 22 and also fixedly connected to the bottom of the outer frame 10. This configuration improves the stability of support for the inner frames 30.

Of course, apart from the above-mentioned configurations for fixing the bottoms of the inner frames 30, the inner frames 30 may also be directly supported and fixed on the corresponding support longitudinal beams 22. Specifically, the bottom of each inner frame 30 may be supported on the upper surface of a respective support longitudinal beam 22 and fixedly connected to the bottom of the outer frame 10. In this way, by defining the fixing method for the bottoms of the inner frames 30, the stability of support for the inner frames 30 is further enhanced.

In other embodiments, as shown in FIG. 2 and FIGs 4 or 5, the support-beam assembly 20 includes a support cross-beam 21. Two ends of the support cross-beam 21 are fixedly connected to two sides of the outer frame 10 in the width direction of the outer frame. The multiple inner frames 30 are supported on the support cross-beam 21. In this configuration, the support cross-beams 21 provide support for the inner frames 30, thereby simplifying the structure of the support-beam assembly 20. That is, this configuration simplifies the structure of the energy-storage container 100 while maintaining the structural stability of the energy-storage container 100.

The support cross-beams 21 may be made of H-section steel, T-section steel, I-section steel, square section steel, or other types of structural steel, with one flange oriented toward the top of the outer frame 10 and the other flange oriented toward the bottom of the outer frame 10. In this manner, when the inner frames 30 are supported on the support cross-beams 21, the support area is enlarged, thereby further enhancing the stability of support for the inner frames 30. In cases where the support cross-beams 21 are made of H-section steel, T-section steel, I-section steel, square section steel, or other types of structural steel, the web of the steel beam may be provided with stress-relief holes to reduce stress deformation of the support cross-beams 21.

A length direction of each support cross-beam 21 may be parallel to the width direction W of the outer frame 10. The number of support cross-beams 21 may be one or more. When multiple support cross-beams 21 are provided, the multiple support cross-beams 21 may be arranged at intervals along the depth direction D of the outer frame 10, and each support cross-beam 21 is fixedly connected at both ends to the bottom of the outer frame 10 along the width direction W. Furthermore, when multiple support cross-beams 21 are included, the multiple support cross-beams 21 may be disposed in parallel along the width direction W of the outer frame 10.

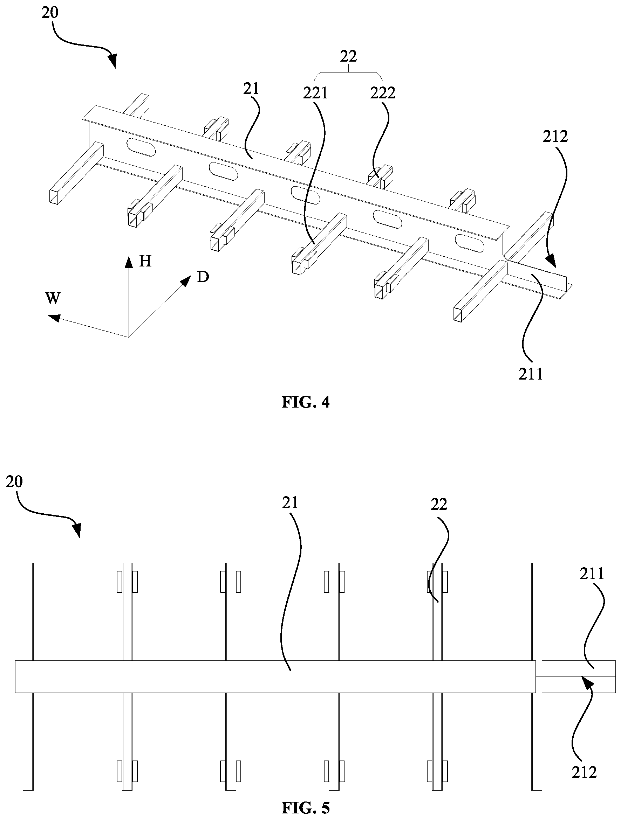

Optionally, in cases where the multiple inner frames 30 divide the accommodating space into an electrical compartment and multiple battery compartments, as shown in FIGs 4 or 5, the support cross-beams 21 may include notched segments 211 located below the electrical compartment. A clearance opening 212 is defined on a side of each notched segment 211 facing away from the bottom of the outer frame 10. With the clearance opening 212 defined on the notched segment 211, the bottom surface of the electrical compartment is lower than that of the battery compartments, which facilitates the straight extension of ventilation pipelines from below the battery compartments into the electrical compartment, thereby accommodating the layout of electrical components within the electrical compartment.

In further embodiments, as shown in FIGs 4 or 5, the support-beam assembly 20 includes both a support cross-beam 21 and multiple support longitudinal beams 22. The configurations of the support cross-beam 21 and the support longitudinal beams 22 may respectively refer to the implementations described in the preceding embodiments.

The support cross-beam 21 is connected to the multiple support longitudinal beams 22. Each inner frame 30 may be supported on a corresponding support longitudinal beam 22, or all may be supported on the support cross-beam 21, or simultaneously supported on both the support cross-beam 21 and the corresponding support longitudinal beams 22. The present embodiments are not limited in this respect.

In some embodiments, the support cross-beam 21 is provided with multiple through holes, and each support longitudinal beam 22 passes through a respective through hole and is fixedly connected to the outer frame 10. With the through holes provided on the support cross-beam 21, the support longitudinal beams 22 may be fixed to both ends of the outer frame 10 in the depth direction D of the outer frame without compromising the structural integrity of the support longitudinal beams 22, thereby enhancing the structural stability of the support-beam assembly 20.

The multiple through holes are distributed along the length direction of the support cross-beam 21. The number of through holes may be equal to or greater than the number of support longitudinal beams 22. In cases where the number of through holes is greater than that of the support longitudinal beams 22, the unused through holes may function as stress-relief holes for the support cross-beam 21.

After a support longitudinal beam 22 passes through a through hole, the support longitudinal beam 22 may be supported on the wall of the through hole or further fixedly connected to the support cross-beam 21 after being supported. In this way, an integrated structure between the support cross-beam 21 and the multiple support longitudinal beams 22 is formed, which further improves the structural stability of the support longitudinal beams 22.

Taking the example where only one support cross-beam 21 is included in the support-beam assembly 20, both ends of each support longitudinal beam 22among the multiple support longitudinal beams22 are symmetrically disposed relative to the support cross-beam 21. This symmetrical arrangement of the support longitudinal beams 22 ensures uniform torque distribution on the support longitudinal beams 22, thereby enhancing the stability of the support longitudinal beams 22 in supporting the inner frames 30.

In other embodiments, in conjunction with the aforementioned case where the number of support cross-beams 21 may be one or more, each support longitudinal beam 22 may be divided into multiple sub-support longitudinal beams 22 according to the number of support cross-beams 21. This configuration allows each support longitudinal beam 22 to be fixedly connected to both ends of the outer frame 10 in the depth direction D of the outer frame without compromising the structural integrity of the support cross-beam 21.

As shown in FIG. 4, when only one support cross-beam 21 is provided, each support longitudinal beam 22 among the multiple support longitudinal beams 22 includes a first sub-longitudinal beam 221 and a second sub-longitudinal beam 222. The first sub-longitudinal beam 221 and the second sub-longitudinal beam 222 of each support longitudinal beam 22 are symmetrically arranged on opposite sides of the support cross-beam 21. A first end of the first sub-longitudinal beam 221 and a first end of the second sub-longitudinal beam 222 are fixedly connected to the support cross-beam 21. A second end of the first sub-longitudinal beam 221 and a second end of the second sub-longitudinal beam 222 are fixedly connected to the two ends of the outer frame 10 in the depth direction of the outer frame, respectively. By providing the first sub-longitudinal beam 221 and the second sub-longitudinal beam 222, both ends of the first sub-longitudinal beam 221 are fixedly connected to one side of the support cross-beam 21 and one end of the outer frame 10 in the depth direction of the outer frame, while both ends of the second sub-longitudinal beam 222 are fixedly connected to the other side of the support cross-beam 21 and the other end of the outer frame 10 in the depth direction of the outer frame. This configuration enables the provision of multiple support longitudinal beams 22 without compromising the structure of the support cross-beam 21, thereby maintaining the structural stability of both the support cross-beam 21 and the energy-storage container 100.

Optionally, when the support longitudinal beam 22 includes a first sub-longitudinal beam 221 and a second sub-longitudinal beam 222, support for the inner frame 30 may be formed on one side of the corresponding support longitudinal beam 22. That is, the bottom of the inner frame 30 may be supported on the first sub-longitudinal beam 221 included by the corresponding support longitudinal beam 22 and fixedly connected to the first sub-longitudinal beam 221, or supported on the second sub-longitudinal beam 222 included by the corresponding support longitudinal beam 22 and fixedly connected to the second sub-longitudinal beam 222. Alternatively, support for the inner frame 30 may be formed on both sides of the corresponding support longitudinal beam 22. That is, the bottom of the inner frame 30 is supported on both the first sub-longitudinal beam 221 and the second sub-longitudinal beam 222 included by the corresponding support longitudinal beam 22 and fixedly connected to both the first sub-longitudinal beam 221 and the second sub-longitudinal beam 222.

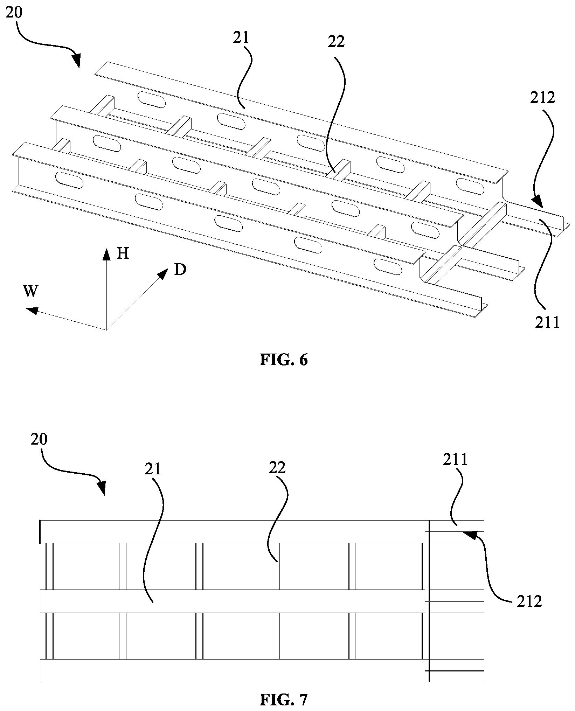

The above-described embodiment illustrates the case where there is only one support cross-beam 21. A different example below involves three support cross-beams 21. As shown in FIG. 6 or FIG. 7, the support-beam assembly 20 includes three support cross-beams 21 arranged in the depth direction D of the outer frame 10. Both ends of each support cross-beam 21 are fixedly connected to opposite sides of the outer frame 10 in the width direction W of the outer frame. The inner frame 30 is supported on the centrally located support cross-beam 21 and is fixedly connected to the two support cross-beams 21 on either side.

Optionally, as shown in FIG. 6 or FIG. 7, the three support cross-beams 21 are connected by multiple support longitudinal beams 22 to form an integrated structure. In this configuration, the bottom of the inner frame 30 may be supported on all three support cross-beams 21 and fixedly connected to the support cross-beams 21 on both sides. Thus, the two side support cross-beams 21 not only support the inner frame 30 but also fix the inner frame 30 in position. This structure allows all three support cross-beams 21 to support the inner frame 30 at the same height. The space between adjacent support cross-beams 21 may facilitate the routing of cables or ventilation pipelines.

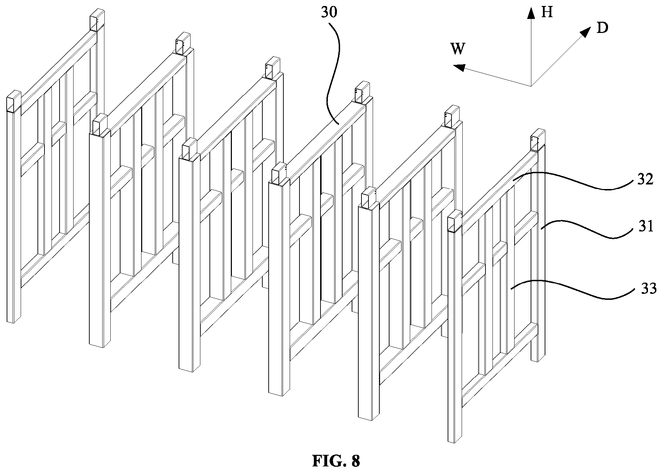

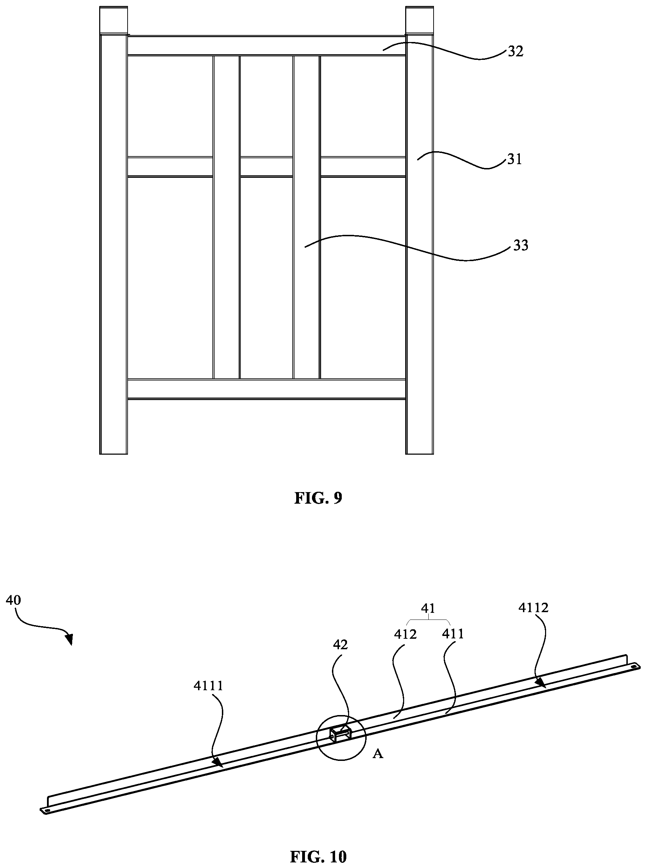

In some embodiments, as shown in FIG. 8 or FIG. 9, each of the multiple inner frames 30 includes a pair of vertical beams 31 and multiple connecting longitudinal beams 32. The pair of vertical beams 31 are parallel to each other. The bottom ends of the vertical beams 31 are supported on the support-beam assembly 20, and the top ends of the vertical beams 31 are fixedly connected to the outer frame 10. Multiple battery supports 40 are fixed to the pair of vertical beams 31. The multiple connecting longitudinal beams 32 are arranged at intervals along an extending direction of the vertical beams 31, with both ends of each connecting longitudinal beam 32 fixedly connected to the pair of vertical beams 31. Through this structure, the inner frame 30 is formed by the interconnection of the pair of vertical beams 31 and the connecting longitudinal beams 32, which improves the structural stability of the inner frame 30 and thus the stability of the battery supports 40 mounted on the inner frame 30.

The vertical beams 31 referred to in the disclosure are beam structures arranged along the height direction H of the outer frame 10. The longitudinal beams described herein include not only the vertical beams 31 of the inner frame 30 but also the reinforcing vertical beams 33 of the inner frame 30 described below.

In conjunction with the previously described configurations of the support-beam assembly 20, when the support-beam assembly 20 includes multiple support longitudinal beams 22, the bottom ends of the vertical beams 31 are supported on corresponding support longitudinal beams 22 of the inner frames 30. When the support-beam assembly 20 includes multiple support cross-beams 21 (taking the example of three support cross-beams 21), the pair of vertical beams 31 are respectively supported on the two support cross-beams 21 located on both sides.

Optionally, the pair of vertical beams 31 and the multiple connecting longitudinal beams 32 may lie in the same plane. This reduces the space occupied by the inner frame 30 in the width direction W of the outer frame 10, thereby allowing higher layout density of the inner frames 30. Alternatively, the multiple connecting longitudinal beams 32 may extend beyond the pair of vertical beams 31 in the width direction of the outer frame 10, with battery supports 40 mounted on the connecting longitudinal beams 32. In this manner, the portions of the connecting longitudinal beams 32 protruding beyond the vertical beams 31 provide additional support for the battery supports 40, thereby increasing the load-bearing capacity of the battery supports 40 and preventing bending or deformation of the battery supports 40 after battery installation.

In some embodiments, as shown in FIG. 8 or FIG. 9, each of the multiple inner frames 30 further includes at least one reinforcing vertical beam 33. The at least one reinforcing vertical beam 33 is located between the pair of vertical beams 31 and fixedly connected to the multiple connecting longitudinal beams 32. With the addition of at least one reinforcing vertical beam 33, the structural stability of the inner frame 30 is further improved.

Optionally, the vertical beams 31, the reinforcing vertical beams 33, and the connecting longitudinal beams 32 may have aligned outer surfaces on the same side along the width direction W of the outer frame 10. This reduces the space occupied by the inner frame 30 in the width direction of the inner frame 10 and enhances the layout density of the inner frame 30. Alternatively, the connecting longitudinal beams 32 may extend beyond both the pair of vertical beams 31 and the at least one reinforcing vertical beam 33 in the width direction of the outer frame 10, with battery supports 40 mounted on the extended portions of the connecting longitudinal beam 32. In this way, the extended portions of the connecting longitudinal beams offer additional support to the battery supports, thereby increasing the load-bearing capacity of the battery supports 40 and preventing deformation of the battery supports 40 after battery installation.

In some embodiments, one of the connecting longitudinal beams 32, which is adjacent to the bottom of the vertical beams 31, is supported on the support-beam assembly 20. By allowing one of the connecting longitudinal beams 32 of the inner frame 30 to be supported on the support-beam assembly 20, the support stability of the support-beam assembly 20 for the inner frame 30 is further improved, thereby enhancing the overall structural stability of the energy-storage container 100.

In conjunction with the above explanation of the support-beam assembly 20, when the support-beam assembly 20 includes multiple support longitudinal beams 22, one of the connecting longitudinal beams 32 positioned near the bottom end of the vertical beams 31 may be entirely supported on a corresponding support longitudinal beam 22 of the inner frame 30. In cases where the bottom ends of the vertical beams 31 are supported on the support longitudinal beams 22, the size of the vertical beams 31 in the width direction W of the outer frame 10 may exceed the size of the support longitudinal beams 22. To ensure that the support longitudinal beams 22 fully support the bottom ends of the vertical beams 31, the support longitudinal beams 22 may be provided with protrusions on both sides along the width direction W of the outer frame 10, thereby increasing the contact area between the support longitudinal beams 22 and the vertical beams 31.

When the support-beam assembly 20 includes support cross-beams 21, one of the connecting longitudinal beams 32 adjacent to the bottom end of the vertical beams 31 may be cross-supported on the support cross-beam 21. If the bottom end of the vertical beam 31 is fixedly connected to the support cross-beam 21, since the support cross-beam 21 extends along the width direction W of the outer frame 10, it ensures that the bottom end of the vertical beam 31 is fully supported on the support cross-beam 21 in the width direction W of the outer frame 10.

In some embodiments, a pair of battery supports 40 may define a battery accommodating slot with an opening on one side of the outer frame in the depth direction D of the outer frame 10, or as shown in FIG. 1, two battery accommodating slots may be defined with openings on both sides of the outer frame in the depth direction D of the outer frame 10 (i.e., two openings facing away from each other). For such a configuration with two openings facing away from each other, it is only necessary to replicate the energy-storage container 100 design in the depth direction D of the outer frame 10. This not only increases the energy capacity of the energy-storage container 100 but also simplifies the design of the energy-storage container 100 despite the increased capacity.

The battery supports 40 are mainly configured to bear and fix the batteries 50. As for the specific structure of the battery supports 40, reference may be made to the related art. Alternatively, the disclosure also provides a battery support 40.

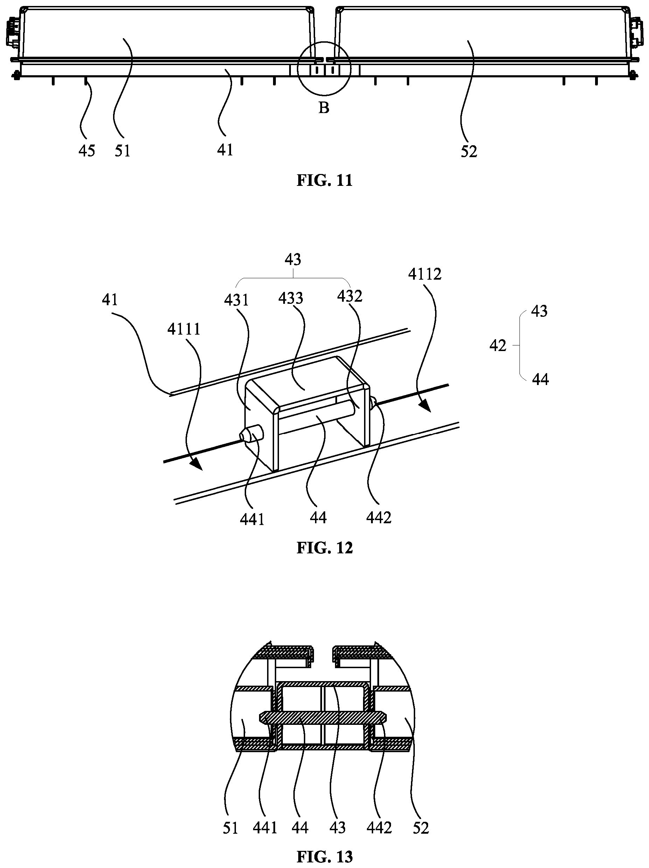

As shown in FIGs 10 and 11, the battery support 40 includes a support member 41 and a limiting assembly 42. The support member 41 includes a bearing surface 411, and the bearing surface 411 has a first bearing zone 4111 and a second bearing zone 4112 distributed along the length direction. The first bearing zone 4111 is configured to support a first battery 51, and the second bearing zone 4112 is configured to support a second battery 52. The limiting assembly 42 is disposed on the support member 41 and located between the first bearing zone 4111 and the second bearing zone 4112. The limiting assembly 42 is configured to limit the first battery 51 supported in the first bearing zone 4111 and the second battery 52 supported in the second bearing zone 4112.

In the embodiments of the disclosure, as shown in FIGs 10 and 11, when batteries are mounted on the battery tray formed by a pair of battery supports 40, the first bearing zone 4111 and the second bearing zone 4112 of the support member 41 may respectively support the first battery 51 and the second battery 52. This improves the layout density of batteries and helps enhance the energy capacity of the energy-storage device using the battery support 40.

In some embodiments, the battery support 40 further includes a first elastic member and a second elastic member. The first elastic member is fixed on the side of the limiting assembly 42 facing the first bearing zone 4111, and the second elastic member is fixed on the side of the limiting assembly 42 facing the second bearing zone 4112.

With the first and second elastic members, when the first battery 51 and the second battery 52 are inserted into the first bearing zone 4111 and second bearing zone 4112, respectively, the elastic buffering effect of the elastic members prevents hard contact between the inserted first battery 51 and second battery 52 and the limiting assembly 42. This improves the safety during fixation of the first battery 51 and the second battery 52 and provides vibration damping for the fixed first battery 51 and second battery 52, thereby enhancing the battery fixation stability.

The first and second elastic members may have identical or different structures. For example, the first elastic member may be a compression spring, a rubber pad, or the like.

In some embodiments, as shown in FIGs 12 and 13, the limiting assembly 42 includes a partition mechanism 43 and a limiting mechanism 44. The partition mechanism 43 is fixed to the support member 41 and configured to divide the bearing surface 411 into the first bearing zone 4111 and the second bearing zone 4112. The limiting mechanism 44 is fixed to the partition mechanism 43 and includes a first limiting portion 441 facing the first bearing zone 4111 and a second limiting portion 442 facing the second bearing zone 4112. The first limiting portion 441 is configured to be inserted into a positioning portion of the first battery 51 supported in the first bearing zone 4111, and the second limiting portion 442 is configured to be inserted into a positioning portion of the second battery 52 supported in the second bearing zone 4112.

The partition mechanism 43 not only divides the bearing surface 411 but also provides rear-end restriction for the batteries, ensuring that the first battery 51 and the second battery 52 are inserted to the proper depth in the first bearing zone 4111 and the second bearing zone 4112, respectively. The positioning portions at the rear ends of the first battery 51 and the second battery 52 may be recessed structures. After the first limiting portion 441 is inserted into the rear positioning portion of the first battery 51, and the second limiting portion 442 is inserted into the rear positioning portion of the second battery 52, the multidirectional restriction on the first battery 51 and the second battery 52 is achieved, thereby enhancing the fixation stability of the first battery 51 and the second battery 52.

The limiting assembly 42 is not limited to the structure comprising the partition mechanism 43 and the limiting mechanism 44 as described above. The limiting assembly may be configured in other forms, so long as the limiting assembly can limit the first battery 51 supported in the first bearing zone 4111 and the second battery 52 supported in the second bearing zone 4112. The present embodiments are not limited in this respect. For example, the limiting assembly 42 may be implemented as a T-shaped pin.

In some embodiments, as shown in FIG. 12, the partition mechanism 43 includes a first baffle 431 and a second baffle 432, and both the first baffle 431 and the second baffle 432 are fixed to the support member 41. The first baffle 431 and the second baffle 432 are spaced apart, with the first baffle 431 positioned at one end of the first bearing zone 4111 (i.e., the end near the limiting assembly 42), and the second baffle 432 positioned at one end of the second bearing zone 4112 (i.e., the end near the limiting assembly 42). In this configuration, the rear end of the first battery 51 supported in the first bearing zone 4111 is restricted by the first baffle 431, and the rear end of the second battery 52 supported in the second bearing zone 4112 is restricted by the second baffle 432. This structure adjusts the insertion depth of the first battery 51 and the second battery 52.

In conjunction with the above-described embodiment in which the battery support 40 includes a first elastic member and a second elastic member, the first elastic member is fixed on the side of the first baffle 431 facing the first bearing zone 4111, and the second elastic member is fixed on the side of the second baffle 432 facing the second bearing zone 4112.

Optionally, the first baffle 431 and the second baffle 432 may be welded to the support member 41 or fixed on the support member 41 by other means. The present embodiments are not limited in this regard.

Optionally, the support member 41 is provided with positioning grooves corresponding to the first baffle 431 and the second baffle 432. These positioning grooves help determine the fixed positions of the first baffle 431 and the second baffle 432 on the support member 41, thereby improving the efficiency in fixing the first baffle 431 and the second baffle 432.

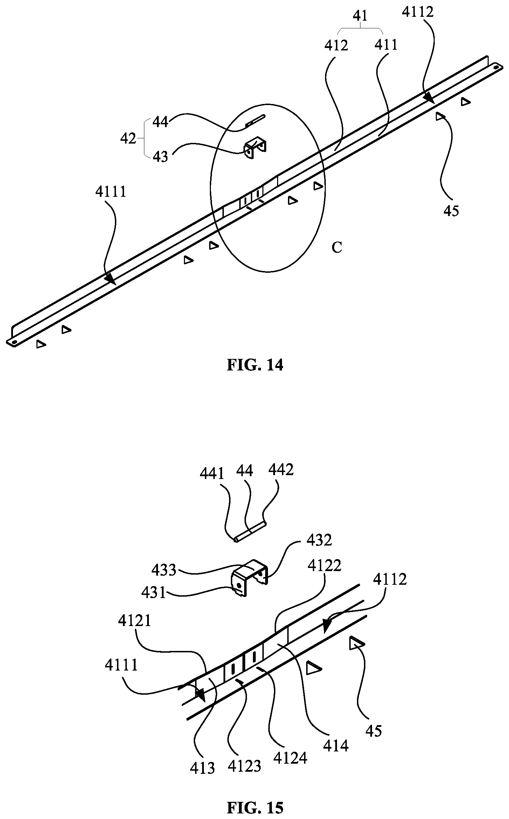

For example, as shown in FIGs 14 and 15, the bearing surface 411 of the support member 41 includes a first positioning groove 4123 and a second positioning groove 4124. The first positioning groove 4123 is configured for positioning the first baffle 431, and the second positioning groove 4124 is configured for positioning the second baffle 432.

Further, as shown in FIGs 12 and 15, the partition mechanism 43 may also include a connecting plate 433, and the connecting plate 433 is located between the first baffle 431 and the second baffle 432. The two ends of the connecting plate 433 in the length direction of the support member 41 are fixedly connected to the first baffle 431 and the second baffle 432, respectively. At least one of the first baffle 431, the second baffle 432, and the connecting plate 433 is fixedly connected to the support member 41.

Since the connecting plate 433 joins the first baffle 431 and the second baffle 432 into an integrated structure, it reduces the number of structural components in the battery support 40. Furthermore, because the first baffle 431 and the second baffle 432 are integrally connected, only one among the first baffle 431, the second baffle 432, or the connecting plate 433 needs to be fixed to the support member 41, thereby improving the fixing efficiency of the partition mechanism 43.

In some embodiments, as shown in FIGs 12 or 15, the limiting mechanism 44 includes a limiting rod (not shown in the drawings). The limiting rod is fixedly connected to the partition mechanism 43 and passes through the partition mechanism 43. Both ends of the limiting rod extend beyond the partition mechanism 43 to define the first limiting portion 441 and the second limiting portion 442.

Thus, the two ends of the limiting rod define the first limiting portion 441 and the second limiting portion 442, respectively. These ends engage with the positioning portions at the rear ends of the first battery 51 and the second battery 52 to achieve multidirectional restriction on the first battery 51 and the second battery 52. In addition, since a single limiting rod defines the first limiting portion 441 and the second limiting portion 442, the number of structural components in the battery support 40 is reduced.

Optionally, the ends of the first limiting portion 441 and the second limiting portion 442 may have a tapered structure. In this way, the cross-sectional area at the ends of the two limiting portions is reduced, thereby facilitating the insertion of the first limiting portion 441 into the positioning portion at the rear end of the first battery 51 and the insertion of the second limiting portion 442 into the positioning portion at the rear end of the second battery 52. Furthermore, the sloped surfaces of the tapered structure provide a guiding effect, enabling rapid engagement of the first limiting portion 441 and the second limiting portion 442 with the first battery 51 and the second battery 52, respectively.

The ends of the first limiting portion 441 and the second limiting portion 442 may be conical, pyramidal, or other shapes, depending on the cross-section of the limiting rod. By way of example, when the limiting rod has a circular cross-section, the ends of the first limiting portion 441 and the second limiting portion 442 may be conical; when the cross-section is elliptical, the ends of the first limiting portion 441 and the second limiting portion 442 may be elliptical cones; and when the cross-section is rectangular, the ends of the first limiting portion 441 and the second limiting portion 442 may be pyramidal.

In other embodiments, in conjunction with the configuration in which the partition mechanism 43 includes the first baffle 431 and second baffle 432, the limiting mechanism 44 may include a first protrusion formed on the side of the first baffle 431 facing the first bearing zone 4111, and a second protrusion formed on the side of the second baffle 432 facing the second bearing zone 4112. The first protrusion defines the first limiting portion 441, and the second protrusion defines the second limiting portion 442, respectively.

Thus, the two limiting portions of the limiting mechanism 44 are realized via the first protrusion and the second protrusion. The first protrusion and the second protrusion engage with the positioning portions at the rear ends of the first battery 51 and the second battery 52, thereby achieving multidirectional restriction on the first battery 51 and the second battery 52.

Optionally, the first and second protrusions may be tapered protrusions, such as conical or pyramidal protrusions. Alternatively, the ends of the protrusions away from the partition mechanism 43 may be chamfered to form rounded edges.

In conjunction with the embodiment where the battery support 40 includes the first and second elastic members, taking both as compression springs as an example, the first elastic member may be sleeved on the first limiting portion 441 of the limiting mechanism 44. The first limiting portion 441 may protrude beyond the first elastic member, or the first elastic member may protrude beyond the first limiting portion 441. Similarly, the second elastic member is sleeved on the second limiting portion 442 of the limiting mechanism 44. The second limiting portion 442 may protrude beyond the second elastic member, or the second elastic member may protrude beyond the second limiting portion 442.

Taking the first elastic member as an example: If the first limiting portion 441 protrudes beyond the first elastic member, when the first battery 51 is inserted into the first bearing zone 4111, the rear positioning portion of the first battery 51 first engages the first limiting portion 441, and then the first limiting portion 441 guides the compression of the first elastic member without bending the first elastic member. If the first elastic member protrudes beyond the first limiting portion 441, when the first battery 51 is inserted into the first bearing zone 4111, the rear positioning portion of the first battery 51 first contacts the elastic member. The elastic buffering prevents hard contact between the rear positioning portion of the first battery 51 and the misaligned first limiting portion 441, thereby improving the safety of the first battery 51.

In the present embodiments, the support member 41 is an elongated structure, which may have a flat profile or a cross-section in the shape of an L, T, or other configurations, so long as it can form the bearing surface 411.

Taking the L-shaped cross-section of the support member 41 as an example, as shown in FIGs 10 or 14, the support member 41 further includes a limiting surface 412. The limiting surface 412 intersects with the bearing surface 411, and the limiting surface 412 extends along a length direction of the bearing surface 411.

The included angle between the limiting surface 412 and the bearing surface 411 may be acute, obtuse, or right. When the limiting surface 412 is perpendicular to the bearing surface 411, the contact area between the limiting surface 412 and the battery increases, thereby improving the limiting effect on the battery.

In conjunction with the embodiment in which the partition mechanism 43 includes the first baffle 431 and the second baffle 432, the first baffle 431 and the second baffle 432 may be fixed on the bearing surface 411 of the support member 41, or on the limiting surface 412 of the support member 41, or simultaneously on both the bearing surface 411 and limiting surface 412 of the support member 41. In the case where both the bearing surface 411 and the limiting surface 412 are used for fixing, each of the bearing surface 411 and the limiting surface 412 includes a corresponding first positioning groove 4123 for the first baffle 431 and a corresponding second positioning groove 4124 for the second baffle 432. In this manner, the use of two first positioning grooves 4123 and two second positioning grooves 4124 further enhances the pre-fixation stability of the first baffle 431 and the second baffle 432.

In some embodiments, as shown in FIG. 15, the limiting surface 412 includes a first guiding surface 413 and a second guiding surface 414. The first guiding surface 413 is located on the side of the limiting assembly 42 near the first bearing zone 4111, and the extension direction of the first guiding surface 413 away from the limiting assembly 42 forms an acute angle with the length direction of the first bearing zone 4111 (away from the second bearing zone 4112). The second guiding surface 414 is located on the side of the limiting assembly 42 near the second bearing zone 4112, and the extension direction of the second guiding surface 414 away from the limiting assembly 42 forms an acute angle with the length direction of the second bearing zone 4112 (away from the first bearing zone 4111).

The first guiding surface 413 includes a first side edge near the limiting assembly 42 and a second side edge away from the limiting assembly 42. In the width direction of the bearing surface 411, the second side edge lies between the first side edge and the limiting assembly 42. The second guiding surface 414 includes a third side edge near the limiting assembly 42 and a fourth side edge away from the limiting assembly 42. In the width direction of the bearing surface 411, the fourth side edge lies between the third side edge and the limiting assembly 42. With this structure, when the first battery 51 is inserted into the first bearing zone 4111, the first guiding surface 413 helps align the widthwise position of the first battery 51, enabling quick alignment between the positioning portion of the first battery 51 and the first limiting portion 441. This ensures the positioning portion is properly fitted to the first limiting portion 441, thus improving the efficiency in fixing the battery 50.

Optionally, the first guiding surface 413 and the second guiding surface 414 are perpendicular to the bearing surface 411. In this manner, when the first guiding surface 413 and the second guiding surface 414 guide the first battery 51 being inserted into the first bearing zone 4111 and the second battery 52 being inserted into the second bearing zone 4112, respectively, the contact area between the first guiding surface 413 and the first battery 51, as well as the contact area between the second guiding surface 414 and the second battery 52, can be increased. This configuration helps prevent wear on the side wall of the first battery 51 caused by the first guiding surface 413, and likewise prevents wear on the side wall of the second battery 52 caused by the second guiding surface 414.

In some embodiments, in conjunction with the support member 41 having an L-shaped cross-section as shown in FIG. 15, the limiting surface 412 includes a first bent section 4121 and a second bent section 4122. The first bent section 4121 is located on the side of the limiting assembly 42 near the first bearing zone 4111, and the second bent section 4122 is located on the side of the limiting assembly 42 near the second bearing zone 4112. In this configuration, the first guiding surface 413 and the second guiding surface 414 are respectively formed on the regions of the limiting surface 412 corresponding to the first bent section 4121 and the second bent section 4122. This avoids the need for additional structural components to guide the batteries in the width direction of the bearing surface 411 and simplifies the structure of the support member 41.

Where the limiting surface 412 includes the first bent section 4121 and the second bent section 4122, the portion of the limiting surface 412 at the position corresponding to the limiting assembly 42 includes a break or notch, allowing the first bent section 4121 and the second bent section 4122 to be formed on either side of the notch.

In other embodiments, the support member 41 includes a first guiding block and a second guiding block. The first guiding block is fixed on the limiting surface 412 at a side of the limiting assembly 42 near the first bearing zone 4111, and a surface of the first guiding block facing away from the limiting surface 412 is inclined away from the limiting surface 412 in the direction near the limiting assembly 42. The second guiding block is fixed on the limiting surface 412 at a side of the limiting assembly 42 near the second bearing zone 4112, and a surface of the first guiding block facing away from the limiting surface 412 is inclined away from the limiting surface 412 in the direction near the limiting assembly 42. In this way, the surface of the first guiding block facing away from the limiting surface 412 defines the first guiding surface 413, and the surface of the second guiding block facing away from the limiting surface 412 defines the second guiding surface 414, which adjust the position of the battery in the width direction of the bearing surface 411 without altering the structure of the limiting surface 412.

Optionally, the first guiding block may be a right-angle trapezoidal block, in which case the side surface where the slanted edge of the trapezoid is located forms the first guiding surface 413. Alternatively, the first guiding block may be a right-angled triangular block, in which case the side surface where the hypotenuse is located forms the first guiding surface 413.

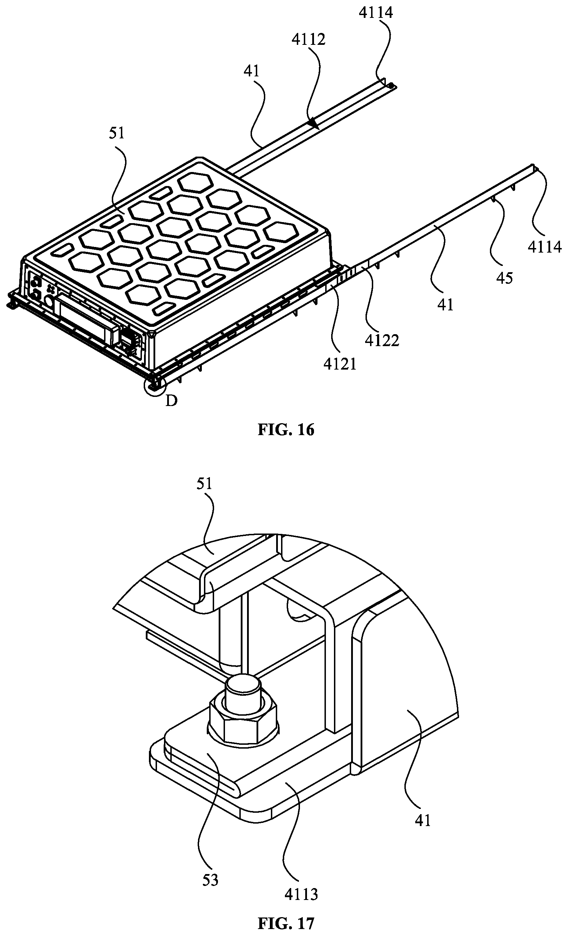

In some embodiments, as shown in FIGs 16 and 17, the bearing surface 411 further includes a first fixing portion 4113 connected to a second end of the first bearing zone 4111 (an end away from the limiting assembly 42), and a second fixing portion 4114 connected to a second end of the second bearing zone 4112 (an end away from the limiting assembly 42). The first fixing portion 4113 is configured to fixedly connect the first battery 51 supported in the first bearing zone 4111, and the second fixing portion 4114 is configured to fixedly connect the second battery 52 supported in the second bearing zone 4112.

Since the first fixing portion 4113 and the second fixing portion 4114 are formed at the longitudinal ends of the bearing surface 411, this avoids the situation where the battery occupies a large space in the width direction of the bearing surface 411, thereby improving space utilization.

Each of the first fixing portion 4113 and the second fixing portion 4114 includes a fixing hole 4115 that passes through the bearing surface 411. The front ends of the first battery 51 and the second battery 52 are provided with mounting holes. When the fixing hole 4115 of the first fixing portion 4113 is aligned with the mounting hole of the first battery 51 supported in the first bearing zone 4111 (i.e., aligned in the direction perpendicular to the bearing surface 411), a locking bolt is used to fasten and secure the front end of the first battery 51. Similarly, when the fixing hole 4115 of the second fixing portion 4114 is aligned with the mounting hole of the second battery 52 supported in the second bearing zone 4112 (i.e., aligned in the direction perpendicular to the bearing surface 411), a locking bolt is used to fasten and secure the front end of the second battery 52.

As shown in FIG. 17, the front end of the battery is provided with a fixing plate 53, and the fixing plate 53 is provided with a mounting hole. When the battery is mounted in the corresponding bearing zone, the fixing plate 53 is in close contact with the bearing surface 411, thereby improving the stability of front-end fixation of the battery. Additionally, when fixing the front end of the battery to the fixing portion, the partition mechanism 43 restricts the rear end of the battery, which helps align the fixing hole 4115 of the fixing portion with the mounting hole in the fixing plate 53, thus improving the efficiency of front-end fixation of the battery.

Of course, in addition to fixing the battery front end using the fixing hole 4115 in the first fixing portion 4113 and the second fixing portion 4114, other fixation means may also be used for front-end fixation of the battery. The present embodiments are not limited in this regard.

In some embodiments, as shown in FIGs 14 or 16, the battery support 40 further includes a reinforcing rib 45, and the reinforcing rib 45 is fixed to a side of the support member 41 facing away from the bearing surface 411.

When the battery support 40 is fixed to a mounting frame, the reinforcing rib 45 is also fixed to the mounting frame. This reinforcement provided by the reinforcing rib 45 improves the supporting strength of the first bearing zone 4111 and the second bearing zone 4112 of the support member 41 for the batteries and prevents deformation of the support member 41 due to loading.

The reinforcing rib 45 may be an integrated structure, i.e., a strip-like structure extending along the length direction of the support member 41. In this case, the cross-section of the reinforcing rib 45 may be triangular, right-angled trapezoidal, among others. Alternatively, the reinforcing rib 45 may include multiple reinforcing blocks distributed along the length direction of the support member 41. The view of the reinforcing blocks in the length direction of the support member 41 may be triangular, right-angled trapezoidal, among others, while the view in the width direction of the support member 41 may be I-shaped, L-shaped, T-shaped, among others. The embodiments of this disclosure do not impose limitations in this regard, as long as the reinforcing rib can enhance the support strength of the first bearing zone 4111 and the second bearing zone 4112 of the support member 41 for the batteries.

The disclosure further provides an electricity-consumption apparatus, which may be an energy-storage device, a vehicle, among others. The electricity-consumption apparatus includes the energy-storage container 100 described in the foregoing embodiments. Accordingly, during operation of the electricity-consumption apparatus disclosed herein, the energy-storage container 100 ensures structural stability, thereby improving the safety of the electricity-consumption apparatus.

In the examples of the disclosure, terms such as "first", "second", and "third" are used solely for descriptive purposes and should not be construed as indicating or implying relative importance. The term "plurality" refers to two or more unless explicitly stated otherwise. Terms such as "mounted", "connected", "linked", "fixed", and the like should be interpreted broadly. For example, "connected" may refer to a fixed connection, a detachable connection, or an integral connection; and "linked" may refer to a direct connection or an indirect connection through an intermediary. For those of ordinary skill in the art, the specific meaning of the above terms in the examples of the disclosure can be understood according to specific situations.

In the description of the examples of the disclosure, it should be understood that terms such as "upper", "lower", "left", "right", "front", "rear", and the like indicate directions or positional relationships based on the directions or positional relationships shown in the drawings. These terms are merely for the convenience of describing the examples of the disclosure and simplifying the description, and are not intended to indicate or imply that the referenced devices or units must have a specific direction, be constructed, or operate in a particular orientation. Therefore, these terms should not be construed as limitations on the examples of the disclosure.

In the description of this specification, terms such as "an example", "some examples", "specific example", and the like mean that the specific features, structures, materials, or characteristics described in connection with the embodiment or exemplary example are included in at least one embodiment or exemplary example of the disclosure. In this specification, schematic representations of the above terms do not necessarily refer to the same embodiment or example. Moreover, the described specific features, structures, materials, or characteristics can be combined in any suitable manner in any one or more embodiments or exemplary examples.

The above descriptions are merely preferred examples of the disclosure and are not intended to limit the disclosure. For those skilled in the art, the examples of the disclosure are subject to various modifications and changes. Any modifications, equivalent replacements, and improvements made within the spirit and principles of the disclosure should fall within the protection scope of the disclosure.

## Claims

1. An energy-storage container, comprising:
an outer frame defining an accommodating space;
a support-beam assembly located at a bottom of the outer frame and fixedly connected to the outer frame;
a plurality of inner frames distributed in the accommodating space along a width direction of the outer frame, wherein the plurality of inner frames divide the accommodating space into a plurality of battery compartments, and the plurality of inner frames are supported on the support-beam assembly and fixedly connected to the outer frame; and
a plurality of pairs of battery supports, wherein each pair of battery supports is respectively fixed to two adjacent inner frames to define a battery accommodating slot, and the plurality of pairs of battery supports are fixed at intervals along a height direction of the outer frame between two adjacent inner frames.

2. The energy-storage container according to claim 1, wherein the support-beam assembly comprises a plurality of support longitudinal beams arranged at intervals along the width direction of the outer frame, and two ends of each support longitudinal beam are respectively fixed to opposite ends of the outer frame in a depth direction of the outer frame; and
wherein the plurality of support longitudinal beams correspond one-to-one with the plurality of inner frames, and each inner frame is supported on a respective support longitudinal beam.

3. The energy-storage container according to claim 2, wherein the support-beam assembly further comprises a support cross-beam, two ends of the support cross-beam are fixedly connected to opposite ends of the outer frame in the width direction of the outer frame, respectively, and the support cross-beam is connected to the plurality of support longitudinal beams.

4. The energy-storage container according to claim 3, wherein the support cross-beam is provided with a plurality of through holes, and each support longitudinal beam passes through one corresponding through hole and is fixedly connected to the outer frame.

5. The energy-storage container according to claim 4, wherein both ends of each support longitudinal beam among the plurality of support longitudinal beams are symmetrically disposed relative to the support cross-beam.

6. The energy-storage container according to claim 3, wherein each support longitudinal beam comprises a first sub-longitudinal beam and a second sub-longitudinal beam;
wherein the first sub-longitudinal beam and the second sub-longitudinal beam of each support longitudinal beam are symmetrically arranged on opposite sides of the support cross-beam, both a first end of the first sub-longitudinal beam and a first end of the second sub-longitudinal beam are fixedly connected to the support cross-beam, and a second end of the first sub-longitudinal beam and a second end of the second sub-longitudinal beam are fixedly connected to opposite sides of the outer frame in the depth direction of the outer frame, respectively.

7. The energy-storage container according to claim 6, wherein a bottom of each inner frame is supported on and fixedly connected to a respective support longitudinal beam comprising the first sub-longitudinal beam and the second sub-longitudinal beam.

8. The energy-storage container according to any one of claims 3 to 7, wherein the support cross-beam is made of H-section steel, T-section steel, I-section steel, or square-section steel.

9. The energy-storage container according to any one of claims 3 to 7, wherein the plurality of inner frames divide the accommodating space into an electrical compartment and a plurality of battery compartments; and
wherein the support cross-beam comprises a notched segment located below the electrical compartment, and a side of the notched segment facing away from the bottom of the outer frame defines a clearance opening.

10. The energy-storage container according to any one of claims 1 to 7, wherein each of the plurality of inner frames comprises a pair of vertical beams and a plurality of connecting longitudinal beams;
the pair of vertical beams are parallel to each other, bottom ends of the vertical beams are supported on the support-beam assembly, top ends of the vertical beams are fixedly connected to the outer frame, and a plurality of battery supports are fixed to the pair of vertical beams; and
the plurality of connecting longitudinal beams are arranged at intervals along an extending direction of the vertical beams, and opposite ends of each connecting longitudinal beam are fixedly connected to the pair of vertical beams, respectively.

11. The energy-storage container according to claim 10, wherein one of the plurality of connecting longitudinal beams adjacent to the bottom ends of the vertical beams is supported on the support-beam assembly.

12. The energy-storage container according to claim 10, wherein the plurality of connecting longitudinal beams extend beyond the pair of vertical beams in the width direction of the outer frame, and each of the plurality of connecting longitudinal beams supports the corresponding battery supports.

13. The energy-storage container according to claim 10, wherein each of the plurality of inner frames further comprises at least one reinforcing vertical beam located between the pair of vertical beams, and the at least one reinforcing vertical beam is fixedly connected to the plurality of connecting longitudinal beams.

14. The energy-storage container according to any one of claims 1 to 7, wherein the outer frame comprises a base frame, a top frame, and a plurality of upright posts;
wherein the base frame and the top frame are disposed opposite to each other, and two ends of each of the plurality of upright posts are respectively fixed to the base frame and the top frame, respectively, and the support-beam assembly is fixedly connected to the base frame;
wherein the top frame comprises a plurality of reinforcing beams arranged along the width direction of the outer frame, the reinforcing beams correspond one-to-one with the plurality of inner frames, and a top portion of each inner frame is fixedly connected to a respective reinforcing beam.
